# EUROPÄISCHE PATENTSCHRIFT

(11) **EP 0 913 901 B1**
(45) Veröffentlichungstag und Bekanntmachung des Hinweises auf die Patenterteilung: **28.04.2004**
(21) Anmeldenummer: 97119182.0
(22) Anmeldetag: 03.11.1997
(51) Int. Cl.: H02G 3/08

(54) **Leitungsdurchführungs-Wand eines Kleinverteilerkastens**
Wirethrough wall for small distribution cabinet
Cloison à traversée de cables pour petite armoire de distribution

(43) Veröffentlichungstag der Anmeldung: 06.05.1999
(73) Patentinhaber: ABL SURSUM BAYERISCHE ELEKTROZUBEHÖR GmbH & Co. KG, D-91207 Lauf (DE)
(72) Erfinder: Maussner, Rainer, 91242 Ottensoos (DE); Hanauer, Petra, 91220 Schnaittach (DE)
(74) Vertreter: Böhme, Volker, Dipl.-Ing.

(56) Entgegenhaltungen:
- DE-U- 9 404 374
- US-A- 3 223 776
- US-A- 4 308 417

## Beschreibung

Die Erfindung betrifft einem Kleinverteilerkasten mit einer Leitungsdurchführungs-Wand, bei der ein durchgehender Wandstreifen und daran ein Durchführungs-Wandbereich vorgesehen sind, bei der der Durchführungs-Wandbereich Wandteile aufweist, für die eine Bewegung aus der Normalposition unter Bildung einer Öffnung vorgesehen ist, und bei der die Wandteile einerends an dem durchgehenden Wandstreifen sitzen und anderenends frei enden.

Ein Kleinverteilerkasten dieser Art ist aus DE 94 04 374 V1 bekannt geworden.

Unter Leitungsdurchführungs-W and wird die Wand verstanden, die dazu dient, die Leitungen in den Kleinverteilerkasten einzuführen bzw. aus dem Kleinverteilerkasten herauszuführen und die insoweit eine Leitungseinführungs-Wand ist. Der Kleinverteilerkasten weist z.B. nur eine Leitungsdurchführungs-Wand auf oder z.B. zwei Leitungsdurchführungs-Wände auf.

Ein Kleinverteilerkasten oder ein Kleinverteilergehäuse wird in eine Bauwerkwand eingeführt oder auf eine Bauwerkwand aufgesetzt. Der Kleinverteilerkasten weist einen von vier Wänden gebildeten Wandrahmen auf und mindestens eine der Wände dient dazu, zuführende elektrische Leitungen in den Kasten hineinzuführen, oder dazu, abführende Leitungen aus dem Kasten herauszuführen. Der Kleinverteilerkasten weist auch Tragelemente auf, an denen Verteiler oder Schalter angebracht werden, die sich dann in dem Kleinverteilerkasten befinden. Die Hindurchführung der elektrischen Leitungen durch die Leitungsdurchführungs-Wand wird vom Installateur an der Bauwerkswand montiert. Die Leitungsdurchführungs-Wand besteht in jedem Fall aus Kunststoff.

Bei einer durch die Praxis bekannten Leitungsdurchführungs-Wand ist der Durchführungs-Wandbereich von mindestens einem Feld geringerer Dicke gebildet, wobei das Feld die Umrisse der zu erzeugenden Öffnung aufweist und entlang den Umrissen eine rinnenartige Dickenschwächung aufweist. Bei der Montage wird das Feld vom Installateur mit einem Seitenschneider entlang der rinnenartigen Dickenschwächung herausgeschnitten. Durch dieses Herausschneiden ist der mit der bekannten Leitungsdurchführungs-Wand verbundene Montageaufwand erheblich groß.

Bei einem bekannten (US 3 223 776 A) Kleinverteilerkasten der eingangs genannten Art ist die Leitungsdurchführungs-Wand mit dem bodenartigen Tragelement dauerhaft fest verbunden. Die Längsstücke biegen sich auf elektrische Leitung treffend aus der Normalposition heraus, wenn ein Kastenoberteil gegenüber einem Kastenunterteil in eine Schließposition bewegt wird. Die zwischengeordneten Trennungen der Längsstücke sind Schlitze und jedes Längsstück weist auch nahe dem Wandstreifen den gleichen Querschnitt auf wie mit größerem Abstand von dem Wandstreifen.

Eine Aufgabe der Erfindung ist es daher, einen Kleinverteilerkasten der eingangs genannten Art mit einer Leitungsdurchführungs-Wand zu schaffen, bei der durch eine Gestaltung des Durchführungs-Wandbereichs eine erhebliche Verminderung des Montageaufwands erreicht ist. Der erfindungsgemäße Kleinverteilerkasten weist, diese Aufgabe lösend, die kennzeichnenden Merkmale des Patentanspruchs 1 auf.

Durch die kammartigen Spalte entfällt ein Aufschneiden des Durchführungs-Wandbereichs. Die Längsstücke werden in der Anzahl aus der Normalposition gebogen, welche der Öffnungsweite entspricht, die für die jeweilige elektrische Leitung nötig ist. Die Längsstücke und Spalte verlaufen etwa quer zum Wandstreifen, d.h. von diesem in Richtung zum freien Ende. Da die Öffnung für die elektrische Leitung allein durch Biegen der Längsstücke des Durchführungs-Wandbereichs erfolgt, ist der Montageaufwand für den Installateur vereinfacht. Die Längsstücke werden aus der Normalposition, die in etwa in der Wandebene liegt, quer zur Wandebene, d.h. in Richtung der Leitung, gebogen und/oder in etwa in der Wandebene, d.h. quer zur Richtung der Leitung, d.h. zur Seite hin gebogen.

Es wird die Wand gegen eine verlegte elektrische Leitung in eine Montiertposition bewegt, wobei sich, die auf die Leitung treffenden Längsstücke aus der Normalposition herausbiegen. Es erfolgt die Öffnung in der Wand durch das In-Position-Bewegen der Wand. Der Montageaufwand ist weiter vereinfacht.

Es weist jedes Längsstück nahe dem Wandstreifen eine im Querschnitt verringerte Schwachstelle auf, welche die Ausbiegung aus der Normalposition aufnimmt. Dies vereinfacht die Ausbiegung der Längsstücke und hat zur Folge, daß die ausgebogenen Längsstücke kaum unter Biegespannung stehen.

Die Schwachstelle ist z.B. eine Sollbruchstelle, so daß das aus der Normalposition herausgebogene Längsstück von dem Wandstreifen abfällt. Besonders zweckmäßig und vorteilhaft ist es jedoch, wenn die Schwachstelle als Filmscharnier ausgebildet auch bei ausgebogenem Längsstück das Längsstück mit dem Wandstreifen verbindet. Die ausgebogenen Längsstücke fallen nicht als lose Teile in den Kleinverteilerkasten. Wenn die Filmscharniere vorgesehen sind, sind die Längsstücke über die Länge relativ starr, d.h. richtige Zähne.

Eine besonders zweckmäßige und vorteilhafte Ausführungsform der Erfindung liegt vor, wenn die Längsstücke in der Normalposition mit den freien Enden aus der Wandebene heraus zur Innenseite der Wand hin schräggestellt sind. Dies erleichtert es, die Längsstücke aus der Normalposition heraus gezielt zur Innenseite hinzubiegen. Dies ist besonders dann wichtig, wenn das Ausbiegen der Längsstücke durch Aufschieben der Wand auf die elektrische Leitung erfolgt. Besonders zweckmäßig und vorteilhaft ist es auch, wenn die Längsstücke sich in einem Endbereich zum freien Ende hin von der Außenseite her im Querschnitt verjüngen. Dies fördert auch das Ausbiegen der Längsstücke in das Innere des Kleinverteilerkastens beim Aufschieben der Wand auf die verlegte Leitung. Die Schrägstellung der Längsstücke bzw. Zähne und die Außenseite-Verjüngung sichern in Kombination ein stets sicheres und einfaches Einklappen der an Filmscharnieren gehaltenen Zähne beim Aufschieben der Wand auf elektrische Leitungen.

Die erfindungsgemäße Leitungsdurchführungs-Wand besteht aus Kunststoff und wird im Spritzgußverfahren hergestellt. In der Regel erstreckt sich der Durchführungs-Wandbereich über den größeren Anteil der Länge der länglichen Wand. Die Längsstücke der kammartigen Gestaltung können als Zähne bezeichnet werden, wenn man unter Zähnen auch über die Länge biegbare Längsstücke versteht. Die Leitungsdurchführungs-Wand ist ein von dem Wandrahmen gesondertes Teil; diese gesonderte Wand ist ein Schiebergebilde und weist an beiden Enden je einen federartigen Steg auf, der in eine Führungsnut des Wandrahmens schiebbar ist. Der Spalt zwischen zwei benachbarten Längsstücken ist in der Regel über die Länge gleichbleibend und in der Regel nicht größer als 2,5 mm. Der Querschnitt der Längsstücke ist über deren Länge hin im wesentlichen gleichbleibend. Die Länge der Längsstücke und Spalte macht in der Regel mindestens die Hälfte der Höhe der Wand aus.

In der Zeichnung ist eine bevorzugte Ausführungsform der Erfindung dargestellt und zeigt
- Fig. 1: eine schematische Draufsicht auf einen Kleinverteilerkasten mit einer Leitungsdurchführungs-Wand,
- Fig. 2: eine Ansicht der Innenseite der Leitungsdurchführungs-Wand gemäß Fig. 1, in einem gegenüber Fig. 1 vergrößerten Maßstab, und
- Fig. 3: einen Schnitt gemäß Linie III-III in Fig. 2.

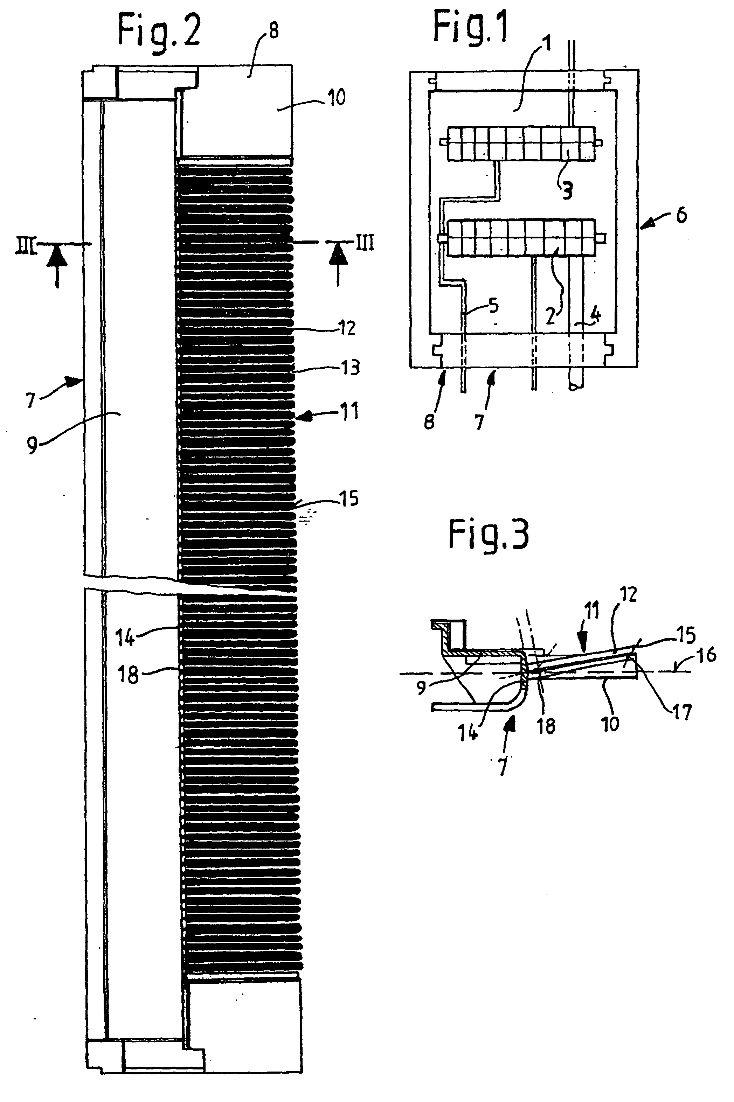

Der Kleinverteilerkasten gemäß Fig. 1 weist ein bodenartiges Tragelement 1 auf, an dem Geräte 2, 3, z.B. Verteiler und Schalter, sitzen, von denen elektrische Leitungen 4, 5 aus dem Kleinverteilerkasten hinausführen. An dem Tragelement 1 sitzt ein rechteckiger Wandrahmen 6, der eine Leitungsdurchführungs-Wand 7 aufweist, die am Rest des Wandrahmens 6 an beiden Enden mittels je einer Halteeinrichtung 8 herausnehmbar gehalten ist. Die Halteeinrichtung 8 ist eine Nut-Feder-Einrichtung und zum einfachen Einsetzen der Wand 7 geeignet. Die Leitungsdurchführungs-Wand 7 ist gemäß Fig. 2 und 3 langgestreckt und rechteckig. Sie umfaßt einen durchgehenden Wandstreifen 9, der der Wand Festigkeit gibt und den Rücken eines Kammes darstellt. An den beiden Enden des Wandstreifens 9 ragt je ein Fortsatz 10 weg und zwischen den beiden Fortsätzen 10 befindet sich ein Durchführungs-Wandbereich 11.

Der Durchführungs-Wandbereich 11 besteht aus einer Vielzahl gleicher Längsstücke 12, die wie Zähne bzw. Zinken eines Kammes gestaltet sind und jeweils durch einen schmalen Spalt 13 voneinander getrennt sind, dessen Breite kleiner ist als die des Längsstückes. Jedes Längsstück 12 ist an einem Ende einstückig mit einem Steg 14 des Wandstreifens 9 und ragt mit dem anderen Ende 15 frei. Der Wand 7 läßt sich eine Wandebene 16 zuordnen und gegenüber dieser sind die Längsstücke 12 in ihrer Normalposition um ca. 10 - 15° schräggestellt. Diese Neigung ist zur Innenseite der Wand hin gerichtet. Zum freien Ende 15 hin sind die Längsstücke 12 auf der Außenseite jeweils mit einer Verjüngung 17 der Dicke versehen. Kurz nach dem Steg 14 ist jedes Längsstück 12 mit einer filmscharnierartigen Schwachstelle 18 versehen, indem das Längsstück sowohl von der Außenseite als auch von der Innenseite her gerillt bzw. gesickt ist, wobei sich der Querschnitt der Rille bzw. Sicke vom Grund her nach außen unter ca. 90° aufweitet.

## Patentansprüche

1. Kleinverteilerkasten,
bei dem eine Leitungsdurchführungs-Wand (7) an einem bodenartigen Tragelement (1) zum Verlegen einer elektrischen Leitung (4, 5) vorgesehen ist,
bei dem die Leitungsdurchführungs-Wand (7) einen durchgehenden Wandstreifen (9) und daran einen Durchführungs-Wandbereich (11) aufweist, bei dem der Durchführungs-Wandbereich (11) eine kammartige Gestaltung mit Längsstücken (12) und zwischengeordneten Trennungen (13) aufweist, bei dem die Längsstücke (12) einerseits wandbildend steif und andererseits eine Öffnung bildend aus einer Normalposition biegbar sind,
bei dem sich dann, wenn die Wand (7) gegen eine verlegte elektrische Leitung (4, 5) bewegt wird, die auf die Leitung treffenden Längsstücke (12) aus der Normalposition herausbiegen,
bei dem bzgl. der Leitungsdurchführungs-Wand (7) eine Innenseite und eine Außenseite vorhanden ist,
bei dem die Leitungsdurchführungs-Wand (7) an beiden Enden mittels je einer Halteeinrichtung (8) herausnehmbar und zum Einsetzen in eine Montiertposition gehalten ist,
bei dem sich die Längsstücke (12) auf die elektrische Leitung (4, 5) treffend aus der Normalposition herausbiegen, wenn die Leitungsdurchführungs-Wand (7) in die Montiertposition bewegt wird, und
bei dem die zwischengeordneten Trennungen der Längsstücke (12) Spalte (13) sind und jedes Längsstück (12) nahe dem Wandstreifen (9) eine im Querschnitt verringerte Schwachstelle (18) aufweist, welche die Ausbiegung aus der Normalposition aufnimmt.

2. Kleinverteilerkasten nach Anspruch 1, **dadurch gekennzeichnet,**
**dass** die Schwachstelle (18) als Filmscharnier ausgebildet auch bei ausgebogenem Längsstück (12) das Längsstück mit dem Wandstreifen (9) verbindet.

3. Kleinverteilerkasten nach Anspruch 1 oder 2, **dadurch gekennzeichnet, dass** die Längsstücke (12) mit den freien Enden (15) aus der Wandebene (16) heraus zur Innenseite hin schräggestellt sind.

4. Kleinverteilerkasten nach Anspruch 1, 2 oder 3, **dadurch gekennzeichnet, dass** die Längsstücke (12) sich in einem Endbereich zum freien Ende (15) hin von der Außenseite her im Querschnitt verjüngen (17).

## Claims

1. Small distribution box, in which a cable guide wall (7) is provided on a base-like support element (1) for laying an electrical cable (4, 5), in which the cable guide wall (7) has a continuous wall strip (9) and thereon a guide wall region (11), in which the guide wall region (11) has a comb-like shape with longitudinal pieces (12) and interposed separations (13), in which the longitudinal pieces (12) are on the one hand stiff in wall-forming manner and on the other hand can be bent from a normal position forming an opening, in which if the wall (7) is moved against a laid electrical cable (4, 5), the longitudinal pieces (12) meeting the cable bend out from the normal position, in which an inner side and an outer side is present with respect to the cable guide wall (7), in which the cable guide wall (7) can be removed at both ends by means of in each case a holding device (8) and is held for insertion into a mounted position, in which the longitudinal pieces (12) bend out from the normal position meeting the electrical cable (4, 5) if the cable guide wall (7) is moved into the mounted position, and in which the interposed separations of the longitudinal pieces (12) are gaps (13) and each longitudinal piece (12) near the wall strip (9) has a weakened point (18) of reduced cross-section, which accommodates the bending out from the normal position.

2. Small distribution box according to claim 1, **characterised in that** the weakened point (18) designed as a film hinge also connects the longitudinal piece with the wall strip (9) when the longitudinal piece (12) is bent out.

3. Small distribution box according to claim 1 or 2, **characterised in that** the longitudinal pieces (12) are tilted with the free ends (15) out from the wall plane (16) towards the inner side.

4. Small distribution box according to claim 1, 2 or 3, **characterised in that** the longitudinal pieces (12) are tapered (17) in cross-section in an end region towards the free end (15) from the outer side.

## Revendications

1. Petite boîte de distribution, dans laquelle est prévue une paroi de passage de ligne (7) à un élément de support (1) d'un type de fond pour la pose d'une ligne électrique (4, 5),
dans laquelle la paroi de passage de ligne (7) présente une bande de paroi continue (9) et à la suite de celle-ci une zone de paroi de passage (11),
dans laquelle la zone de paroi de passage (11) présente une configuration en forme de peigne avec des pièces longitudinales (12) et des séparations (13) disposées entre celles-ci,
dans laquelle les pièces longitudinales (12), d'une part, sont rigides d'une manière formatrice de paroi et, d'autre part, en formant une ouverture, peuvent être courbées hors d'une position normale,
dans laquelle, lorsque la paroi (7) est déplacée vers une ligne électrique posée (4, 5), les pièces longitudinales (12) venant en contact avec la ligne se courbent hors de la position normale,
dans laquelle est prévu relativement à la paroi de passage de ligne (7) un côté intérieur et un côté extérieur,
dans laquelle la paroi de passage de ligne (7) est retenue aux deux extrémités au moyen de respectivement une installation de retenue (8) de manière extractible et pour la mise en place dans une position de montage,
dans laquelle les pièces longitudinales (12), venant en contact avec la ligne électrique (4, 5), se courbent hors de la position normale lorsque la paroi de passage de ligne (7) est amenée dans la position montée et
dans laquelle les séparations ménagées entre les pièces longitudinales (12) sont des fentes (13), et chaque pièce longitudinale (12) présente à proximité de la bande de paroi (9) un emplacement d'affaiblissement (18) d'une section transversale réduite qui reçoit la courbure hors de la position normale.

2. Petite boîte de distribution selon la revendication 1, **caractérisée en ce que** l'emplacement d'affaiblissement (18), réalisé comme charnière de film, relie la pièce longitudinale à la bande de paroi (9) également lorsque la pièce longitudinale (12) est courbée vers l'extérieur.

3. Petite boîte de distribution selon la revendication 1 ou 2, **caractérisée en ce que** les pièces longitudinales (12) avec leurs extrémités libres (15) sont positionnées d'une manière oblique à partir du plan de paroi (16) vers le côté intérieur.

4. Petite boîte de distribution selon la revendication 1, 2 ou 3, **caractérisée en ce que** les pièces longitudinales (12), dans une zone d'extrémité vers l'extrémité libre (15), diminuent en section transversale depuis le côté extérieur.
